# FASCICULE DE BREVET EUROPEEN

(11) **EP 0 370 865 B1**
(45) Date de publication et mention de la délivrance du brevet: **03.02.1993**
(21) Numéro de dépôt: 89403128.5
(22) Date de dépôt: 14.11.1989
(51) Int. Cl.: B64C 25/50, F15B 15/04, F15B 15/06

(54) **Dispositif d'orientation d'un atterrisseur**
Lenkungsvorrichtung für ein Fahrwerk
Landing gear orientation device

(30) Priorité: 18.11.1988 FR 8815002
(43) Date de publication de la demande: 30.05.1990
(73) Titulaire: MESSIER BUGATTI, F-78140 Velizy Villacoublay (FR)
(72) Inventeur: Bouchez, Bernard, F-91120 Palaiseau (FR); Derrien, Michel, F-78000 Versailles (FR)
(74) Mandataire: Fruchard, Guy

(56) Documents cités:
- FR-A- 859 585
- US-A- 3 124 043
- US-A- 3 430 896
- US-A- 4 313 364

## Description

La présente invention concerne un dispositif d'orientation d'un atterrisseur.

On sait que pour diriger un avion lors du roulage au sol il est nécessaire de prévoir des atterrisseurs orientables, généralement les atterrisseurs auxiliaires. Un atterrisseur orientable comporte un caisson destiné à être fixé à l'avion, généralement de façon rétractable, un tube tournant monté pour tourner par rapport au caisson, une tige coulissante montée pour coulisser dans le tube tournant et relié à celui-ci par un compas, la tige coulissante supportant à sa partie inférieure les roues de l'atterrisseur. Pour orienter les roues de l'atterrisseur, celui-ci comporte un dispositif d'orientation qui comprend généralement soit un vérin équipé d'une crémaillère associée à une couronne dentée portée par le tube tournant, soit un moteur hydraulique rotatif fixé au caisson et comportant un pignon engagé avec une couronne dentée portée par le tube tournant.

Les documents US-A-3.124.043 et 4.313.364 décrivent tous les deux, un dispositif d'orientation d'atterrisseur comportant un corps fixé à un caisson de l'atterrisseur, un vilebrequin disposé pour tourner dans le corps autour d'un axe de rotation parallèle à un axe de rotation d'un support de roue, des moyens de liaison d'une extrémité du vilebrequin avec le support de roue, et au moins deux vérins s'étendant perpendiculairement à l'axe de rotation du vilebrequin, ces vérins ayant chacun une extrémité fixée de façon articulée au corps pour pivoter autour d'un axe de pivotement parallèle à l'axe de rotation du vilebrequin et une extrémité articulée à un maneton du vilebrequin, les vérins étant reliés à des moyens de distribution d'un fluide d'alimentation comprenant des conduits d'alimentation et de retour fixés au corps du dispositif d'orientation.

Toutefois, dans les deux cas les vérins sont alimentés par des organes de distribution complexes qui diminuent la précision et la rapidité de manoeuvre du dispositif d'orientation.

Un but de la présente invention est de proposer un dispositif d'orientation d'un atterrisseur ayant des moyens de distribution de structure simple et s'adaptant automatiquement à l'orientation de l'atterrisseur.

En vue de la réalisation de ce but, on prévoit selon l'invention un dispositif d'orientation à vilebrequin du type précité dans lequel les vérins comprennent au moins une face polie s'étendant perpendiculairement à l'axe de pivotement des vérins et comportant au moins un orifice de commande, et les conduits d'alimentation et de retour débouchent en regard de la face polie des vérins et sont équipés de moyens d'étanchéité comprenant des patins de glissement disposés pour glisser par rapport à la face polie du vérin en regard. De préférence, les patins de glissement sont portés par des pistons différentiels ayant chacun une première extrémité engagée de façon étanche dans le patin de glissement, une seconde extrémité de section plus grande engagée dans un conduit du corps, et un canal de liaison entre les deux extrémités. Ainsi, lors de la rotation du vilebrequin, les oscillations des vérins mettent automatiquement ceux-ci en liaison alternative avec les conduits d'alimentation et les conduits de retour.

Selon encore un autre aspect avantageux de l'invention, des moyens de distribution sont associés à deux faces opposées de chacun des vérins. Ainsi, les vérins sont soumis à des forces symétriques de la part des moyens de distribution et on minimise les contraintes de cisaillement sur l'axe de pivotement des vérins.

D'autres caractéristiques et avantages de l'invention apparaîtront à la lecture de la description qui suit d'un mode de réalisation particulier non limitatif de l'invention en liaison avec les dessins ci-joints parmi lesquels :
- la figure 1 est une vue en perspective schématique partiellement écorchée du dispositif selon l'invention,
- la figure 2 est une vue partiellement en coupe selon un plan vertical II-II de la figure 3, d'un mode de réalisation préféré de l'invention,
- la figure 3 est une vue de dessus partiellement en coupe selon la ligne III-III des figures 2 et 4,
- la figure 4 est une vue en coupe partielle agrandie selon la ligne IV-IV de la figure 3.

En référence aux figures, le dispositif d'orientation selon l'invention est prévu pour être monté sur un atterrisseur comportant un caisson 1 adapté à être fixé à un avion, un tube tournant 2 monté pour tourner dans le caisson 1 autour d'un axe de rotation de tube tournant et une tige coulissante 3 montée pour coulisser dans le tube tournant 2 pour supporter les roues et reliée au tube tournant par un compas (non représenté). Le dispositif d'orientation selon l'invention comporte un corps 4, ici un carter en deux parties réunies l'une à l'autre de façon appropriée, fixé au caisson 1, par exemple par des boulons 5 engagés à travers des pattes 6 et 7 respectivement solidaires du caisson 1 et du corps 4.

Le corps 4 est symétrique par rapport à un plan vertical passant par l'axe du caisson 1. Un vilebrequin généralement désigné en 8 est monté dans des paliers 9 du corps 4 pour tourner autour d'un axe de rotation de vilebrequin parallèle à l'axe de rotation du tube tournant 2. A son extrémité inférieure, le vilebrequin porte un pignon denté 10 qui engrène avec une couronne dentée 11 fixée au tube tournant 2.

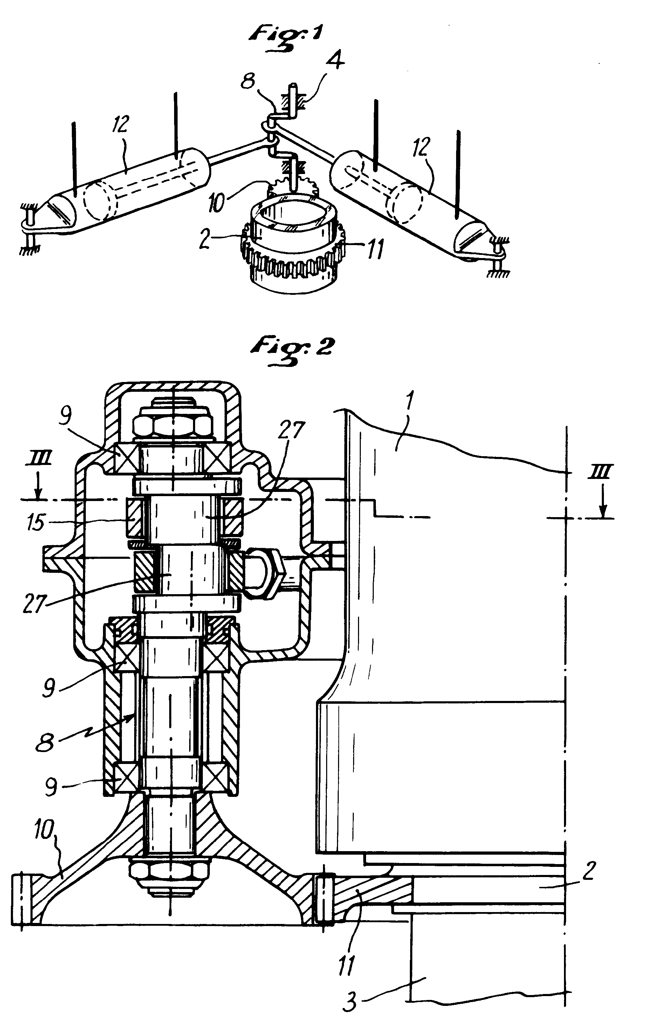

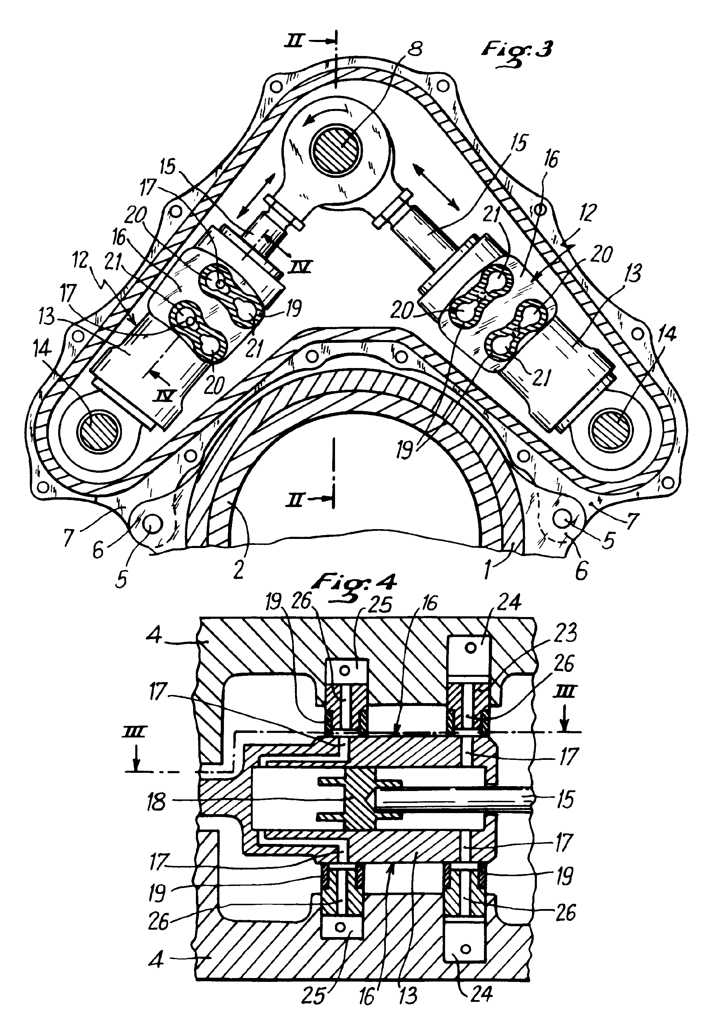

Deux vérins généralement désignés en 12 sont montés à l'intérieur du corps 4 et comportent chacun un corps 13 dont l'extrémité arrière est montée pour pivoter sur un axe de pivotement 14, porté par le corps 4, et une tige 15 dont une extrémité est montée pour pivoter sur un maneton 27 du vilebrequin 8. Ainsi qu'on peut le voir sur les figures 2 et 3, les vérins 12 sont disposés pour osciller de part et d'autre de deux directions médianes perpendiculaires l'une par rapport à l'autre et les deux manetons 27 sont excentrés l'un par rapport à l'autre d'un angle d'environ 30° autour de l'axe de rotation du vilebrequin 8.

Chacun des vérins 12 comporte deux faces opposées polies 16 s'étendant perpendiculairement à l'axe de pivotement 14 des vérins et percées de deux orifices de commande 17 dont l'un est en communication avec une face avant du piston 18 du vérin tandis que l'autre est en communication avec une face arrière du piston 18. Des patins de glissement 19 sont montés en appui sur les faces polies 16 des vérins et comportent des lumières d'alimentation 20 et des lumières de retour 21 disposées en diagonale. Des pistons différentiels 23 ont chacun une première extrémité engagée de façon étanche dans une lumière d'un patin de glissement 19 et une seconde extrémité de section plus grande engagée dans un conduit d'alimentation 24 ou un conduit de retour 25 s'étendant dans le corps 4. Les pistons différentiels 23 sont en outre traversés par un canal de liaison 26 entre le conduit correspondant du corps 4 et la lumière en regard du patin de glissement 19. Les conduits d'alimentation 24 et de retour 25 sont convenablement reliés à des circuits hydrauliques de l'avion associés aux organes de commande de l'orientation de l'atterrisseur.

Le fonctionnement du dispositif selon l'invention est le suivant : lorsque du fluide de commande est envoyé dans les conduits d'alimentation 24, la pression agit sur les pistons différentiels 23 pour plaquer les patins de glissement 19 contre la face polie 16 du vérin 12 en regard. Les pistons différentiels 23 et les patins de glissement 19 constituent donc des moyens d'étanchéité des conduits d'alimentation par rapport à la face du vérin en regard. En fonction de la position du vérin autour de son axe de pivotement 14, le vérin est alors alimenté dans le sens d'une extension ou d'une rétraction de la tige de vérin 15. Par exemple, dans la position sur la figure 3, le vérin de gauche (Fig. 4) à chacun de ses orifices de commande 17 avant en regard d'une lumière 20 du patin de glissement 19 associée à un conduit d'alimentation 24 tandis que chaque orifice de commande arrière est en regard d'une lumière 21 associée à un conduit de retour 25. Le piston 18 du vérin de gauche est donc soumis à une pression différentielle entraînant une rétraction de la tige 15. Simultanément, la tige de vérin 15 du vérin de droite est complètement sortie et le corps 13 de ce vérin se trouve donc exactement dans l'axe des patins de glissement 19 en regard. Dans cette position, les quatre orifices de commande 17 sont recouverts par la partie médiane des patins de glissement et ne sont donc en communication ni avec les conduits d'alimentation ni avec les conduits de retour. La rétraction de la tige 15 du vérin de gauche provoque une rotation du vilebrequin 8 et simultanément un pivotement du corps 13 du vérin de droite dont les orifices de commande avant viennent en regard avec des lumières d'alimentation 20 associées à des conduits d'alimentation tandis que les orifices de commande arrière viennent en regard des lumières 21 associées au conduit de retour 25, etc. Lorsque les conduits d'alimentation 24 sont mis sous pression on obtient donc une rotation automatique du vilebrequin qui est transmise au tube tournant par le pignon denté 10 et la couronne dentée 11.

Lorsque l'on souhaite remorquer l'avion et laisser l'atterrisseur s'orienter de lui-même selon la direction de remorquage, les conduits d'alimentation et de retour sont tous reliés au réservoir de retour de fluide hydraulique de l'avion. Les pistons 18 se déplacent alors librement dans les vérins et le vilebrequin est libre de prendre la position qui lui est imposée par les roues lors des mouvements de l'avion au sol.

Bien entendu l'invention n'est pas limitée au mode de réalisation décrit et on peut y apporter des variantes de réalisation sans sortir du cadre de l'invention telle que revendiquée. En particulier, bien qu'il ait été constaté qu'il soit préférable de disposer les vérins selon deux directions médianes perpendiculaires pour améliorer la régularité du couple transmis au vilebrequin 8 par les vérins, et que cette régularité soit encore améliorée en disposant les manetons 16 de façon excentrée selon un angle d'environ 30° par rapport à l'axe de rotation du vilebrequin, d'autres dispositions des vérins peuvent être adoptées si cette disposition n'est pas satisfaisante du point de vue de l'encombrement du dispositif d'orientation.

On peut également prévoir des moyens de distribution conventionnels à l'intérieur de l'avion, ces moyens de distribution étant reliés aux orifices de commande des vérins par des conduits flexibles afin de permettre les oscillations des vérins autour des axes de pivotement 14 lors de la rotation du vilebrequin 8.

## Revendications

1. Dispositif d'orientation d'atterrisseur comportant un corps (4) fixé à un caisson de l'atterrisseur, un vilebrequin (8) disposé pour tourner dans le corps (4) autour d'un axe de rotation parallèle à un axe de rotation d'un support de roue (3), des moyens de liaison (10,11,12) d'une extrémité du vilebrequin (8) avec le support de roue (3) et au moins deux vérins (12) s'étendant perpendiculairement à l'axe de rotation de vilebrequin, ces vérins ayant chacun une extrémité fixée de façon articulée au corps pour pivoter autour d'un axe de pivotement (14) parallèle à l'axe de rotation de vilebrequin et une extrémité articulée à un maneton (27) du vilebrequin, les vérins étant reliés à des moyens de distribution d'un fluide d'alimentation comprenant des conduits d'alimentation et de retour portés par le corps (4), caractérisé en ce que les vérins comprennent au moins une face polie (16) s'étendant perpendiculairement à l'axe de pivotement (14) des vérins et comportant au moins un orifice de commande (17), et en ce que les conduits d'alimentation et de retour débouchent en regard de la face polie (16) des vérins et sont équipés de moyens d'étanchéité comprenant des patins de glissement (19) disposés pour glisser par rapport à la face polie (16) du vérin en regard.

2. Dispositif d'orientation selon la revendication 1 caractérisé en ce que les patins de glissement (19) sont portés par des pistons différentiels (23) ayant chacun une première extrémité engagée de façon étanche dans le patin de glissement (19), une seconde extrémité de section plus grande engagée dans un conduit (24,25) du corps, et un canal de liaison (26) entre les extrémités.

3. Dispositif d'orientation selon la revendication 1 ou la revendication 2 caractérisé en ce qu'il comporte des moyens de distribution associés à deux faces opposées de chacun des vérins.

## Patentansprüche

1. Lenkvorrichtung für ein Fahrwerk, mit einem an einer Aufnahme des Fahrwerks befestigten Gehäuse (4), einer in dem Gehäuse angeordneten Kurbelwelle (8), die sich um eine zu einer Drehachse einer Radaufhängung (3) parallele Drehachse drehen kann, mit Verbindungsmitteln (10,11,12) zum Verbinden eines Endes der Kurbelwelle (8) mit der Radaufhängung (3) und mit mindestens zwei Stellzylindern (12), die sich rechtwinklig zur Drehachse der Kurbelwelle erstrecken und deren jeweils eines Ende um eine zur Drehachse der Kurbelwelle parallele Schwenkachse (14) schwenkbar mit dem Gehäuse verbunden ist und deren jeweils anderes Ende schwenkbar mit einem Zapfen (27) der Kurbelwelle verbunden ist, wobei die Stellzylinder mit Verteilmitteln für ein Druckfluid verbunden sind, die in dem Gehäuse angeordnete Zuführ- und Rückführleitungen umfassen, dadurch **gekennzeichnet,** daß die Stellzylinder je mindestens eine polierte Fläche (16) aufweisen, die sich rechtwinklig zur Schwenkachse (14) der Stellzylinder erstreckt und mindestens eine Steueröffnung (17) aufweist, und daß die Zuführund Rückführleitungen gegenüber der polierten Fläche (16) der Stellzylinder münden und Dichtmittel aufweisen, die Gleitschuhe (19) zum Gleiten auf der entsprechenden polierten Fläche (16) des betreffenden Stellzylinders umfassen.

2. Lenkvorrichtung nach Anspruch 1, dadurch **gekennzeichnet,** daß die Gleitschuhe von Differentialkolben (23) getragen werden, die jeder mit jeweils einem Ende dichtend mit dem Gleitschuh (19) verbunden sind, wobei jeweils ein zweites Ende mit größerem Querschnitt in einer Leitung (24,25) des Gehäuses angeordnet ist, und die einen Verbindungskanal (26) zwischen den beiden Enden aufweisen.

3. Lenkvorrichtung nach Anspruch 1 oder nach Anspruch 2, dadurch **gekennzeichnet,** daß sie Verteilmittel umfaßt, die zwei nach entgegengesetzten Seiten weisenden Flächen eines jeden Stellzylinders zugeordnet sind.

## Claims

1. Landing gear steering apparatus comprising a body (4) fixed to the strut of landing gear, a crank (8) disposed to rotate inside the body (4) about an axis of rotation parallel to a swivel axis of a wheel support (3), link means (10, 11, 2) linking one end of the crank (8) with the wheel support (3), and at least two actuators (12) extending perpendicularly to the axis of rotation of the crank, said actuators each having one end hinged to the body in order to pivot about a corresponding pivot axis (14) extending parallel to the axis of rotation of the crank, and one end hinged to a crank pin (27) of the crank, the actuators being connected to driving fluid distribution means comprising feed ducts and return ducts carried by the body (4) characterized in that the actuators include at least one polished face (16) extending perpendicular to the pivot axis (14) of the actuators and comprising at least one control orifice (17), and in that the feed ducts and return ducts open out facing at least one polished face (16) of the actuators and are fitted with sealing means comprising sliding skids (19) disposed to slide over the polished face (16) of the facing actuator.

2. Steering apparatus according to claim 1, characterized in that the sliding skids (19) are carried by differential pistons (23) each having a first end engaged in sealed manner in the sliding skid (19), a second end of larger section engaged in one of the ducts (24, 25) of the body, and a duct (26) interconnecting the two ends.

3. Steering apparatus according to claim 1 or 2, characterized in that it includes distribution means associated with two opposite faces of each of the actuators.
